# EUROPEAN PATENT APPLICATION

(11) **EP 3 860 185 A1**
(43) Date of publication of application: **04.08.2021**
(21) Application number: 18934954.1
(22) Date of filing: 27.09.2018
(51) Int. Cl.: H04W 16/28, H04W 92/18

(54) **USER EQUIPMENT**

(71) Applicant: NTT DoCoMo, Inc., Tokyo 100-6150 (JP)
(72) Inventor: KAKISHIMA, Yuichi, Tokyo 100-6150 (JP); OSAWA, Ryosuke, Tokyo 100-6150 (JP)
(74) Representative: Hoffmann Eitle
(86) International application number: PCT/JP2018/036140
(87) International publication number: WO 2020/065891

(57) **Abstract**

A user device includes a control unit that determines a spatial reception parameter of a control channel or a data channel based on quasi-co-location (QCL) information related to a reference signal and a receiving unit that performs reception by applying reception beam forming to the control channel or the data channel based on the determined spatial reception parameter.

## Description

### TECHNICAL FIELD

The present invention relates to a user device in a radio communication system.

### BACKGROUND ART

In Long Term Evolution (LTE), successor systems of LTE (for example, LTE-Advanced (LTE-A), and New Radio (NR) (also called 5G)), device to device (D2D) technology in which user devices perform communication directly with each other without going through a base station device is under review (for example, Non-Patent Document 1).

In D2D, it is possible to reduce traffic between a user device and a base station device, and communication between user devices can be performed even when a base station device is unable to perform communication in the event of a disaster or the like. In 3rd Generation Partnership Project (3GPP), D2D is called "sidelink," but D2D which is a more general term is used in this specification. However, in the description of an embodiment to be described later, a sidelink is also used if necessary.

D2D communication is roughly classified into D2D discovery for discovering other devices which are capable of performing communication and D2D communication (also referred to as D2D direct communication, D2D communication, inter-terminal direct communication, and the like) in which direct communication between user devices is performed. Hereinafter, when D2D communication, D2D discovery, and the like are not particularly distinguished, they are referred to simply as D2D. A signal transmitted and received by D2D is referred to as a D2D signal. In NR, various use cases of services related to vehicle to everything (V2X) are under review (for example, Non-Patent Document 2).

### Related Art Document

### [Non-Patent Document]

Non-Patent Document 1: 3GPP TS 36.211 V15.2.0 (2018-06)
Non-Patent Document 2: 3GPP TR 22.886 V15.1.0 (2017-03)

### SUMMARY OF THE INVENTION

### [PROBLEM TO BE SOLVED BY THE INVENTION]

In inter-terminal direct communication in V2X, it is necessary to acquire time synchronization and frequency synchronization. Furthermore, when beams are used, it is necessary for a user device to determine a reception beam forming to be applied to a signal or a channel to be received.

The present invention has been accomplished in view of the above-described point, and an object is to enable the user device to select an appropriate reference signal and execute communication in the inter-terminal direct communication.

### [MEANS FOR SOLVING THE PROBLEM]

According to the technology of the disclosure, there is provided a user device including a control unit that determines a spatial reception parameter of a control channel or a data channel based on quasi-co-location (QCL) information related to a reference signal and a receiving unit that performs reception by applying reception beam forming to the control channel or the data channel based on the determined spatial reception parameter.

### [ADVANTAGE OF THE INVENTION]

According to the technology of the disclosure, the user device can select an appropriate reference signal and execute communication in the inter-terminal direct communication.

### BRIEF DESCRIPTION OF DRAWINGS

Fig. 1 is a diagram for illustrating V2X;
Fig. 2 is a diagram for illustrating direct communication in V2X;
Fig. 3 is a diagram for illustrating communication via a base station in V2X;
Fig. 4 is a diagram illustrating an example of a sidelink signal;
Fig. 5 is a diagram for illustrating control of a beam in an embodiment of the present invention;
Fig. 6 is a diagram illustrating an example of a sidelink signal in an embodiment of the present invention;
Fig. 7 is a diagram illustrating an example of a functional configuration of a base station device 10 in an embodiment of the present invention;
Fig. 8 is a diagram illustrating an example of a functional configuration of a user device 20 in an embodiment of the present invention; and
Fig. 9 is a diagram illustrating an example of a hardware configuration of a base station device 10 or a user device 20 in an embodiment of the present invention.

### [EMBODIMENTS OF THE INVENTION]

Hereinafter, an embodiment of the present invention is described with reference to the appended drawings. Note that the following is an example, and an embodiment to which the present invention is applied is not limited to the following embodiment.

In an operation of a radio communication system of an embodiment of the present invention, existing technology is appropriately used. Here, the existing technology is, for example, existing LTE but not limited to existing LTE. Further, the term "LTE" used in this specification has a broad meaning including LTE-Advanced and a scheme subsequent to LTE-Advanced (for example, NR), or a wireless local area network (LAN) unless as otherwise specified.

In the following description, a method of transmitting a signal using a transmission beam may be digital beam forming of transmitting a signal (pre-coded with a pre-coding vector) multiplied by a pre-coding vector or may be analog beam forming for implementing beam forming using a variable phase shifter in a radio frequency (RF) circuit. Similarly, a method of receiving a signal using a reception beam may be digital beam forming of multiplying a received signal by a predetermined weight vector or may be analog beam forming of implementing beam forming using a variable phase shifter in a RF circuit. Hybrid beam forming in which digital beam forming and analog beam forming are combined may be applied. Furthermore, transmitting a signal using a transmission beam may be transmitting a signal through a specific antenna port. Similarly, receiving a signal using a reception beam may be receiving a signal through a particular antenna port. An "antenna port" refers to a logical antenna port or a physical antenna port defined in the 3GPP standard. In addition, a precoding or the beam forming is also referred to as a "pre-coder" or a "spatial domain filter."

A method of forming the transmission beam and the reception beam is not limited to the above-described methods. For example, in a base station device 10 and a user device 20 included in the radio communication system of an embodiment of the present invention, a method of changing an angle of each antenna may be used, a method in which a method using a precoding vector and a method of changing an angle of an antenna are combined may be used, a method of switching and using different antenna panels may be used, a method of using a combination of a plurality of antenna panels may be used, or any other method may be used. Furthermore, for example, a plurality of different transmission beams may be used in a high frequency band. Using a plurality of transmission beams is referred to as a multi-beam operation, and using a single transmission beam is used is referred to as a single beam operation.

In an embodiment of the present invention, a duplex method may be a time division duplex (TDD) method, a frequency division duplex (FDD) method, or any other method (for example, a flexible duplex or the like).

Furthermore, in an embodiment of the present invention, when a radio parameter or the like is "configured", it may mean that a predetermined value is "pre-configured" or it may mean that a radio parameter provided by notification from the base station device 10 or the user device 20 is configured.

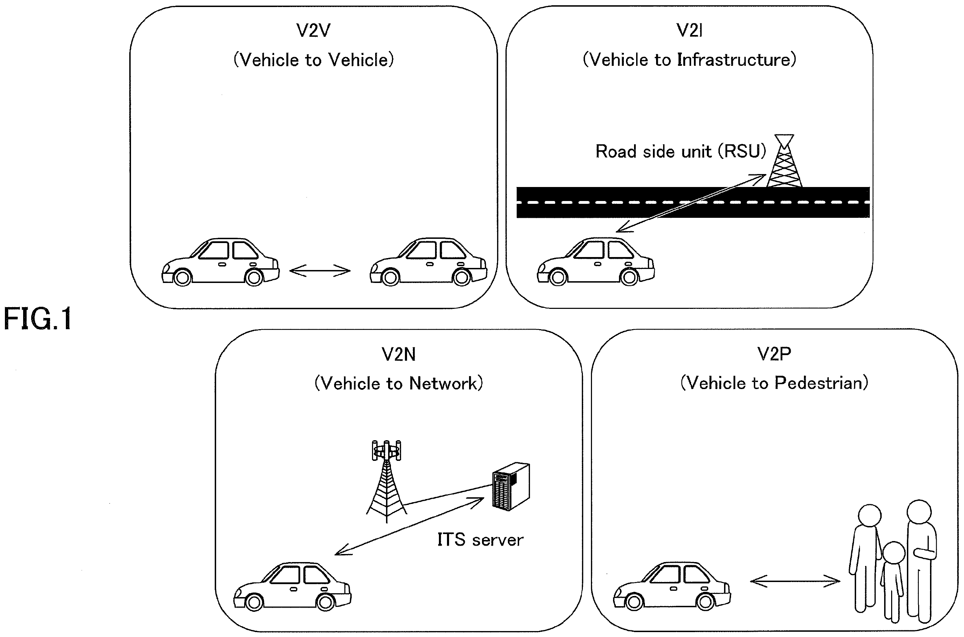

Fig. 1 is a diagram for illustrating V2X. In 3GPP, implementing vehicle to everything (V2X) or enhanced V2X (eV2X) by extending a D2D function is under review, and specifications thereof is in progress. As illustrated in Fig. 1, V2X is a part of intelligent transport systems (ITS) and is a generic term of vehicle to vehicle (V2V) meaning a communication form performed between vehicles, vehicle to infrastructure (V2I) meaning a communication form performed between a vehicle and a road-side unit (RSU) installed on a road side, vehicle to network (V2N) meaning a communication mode performed between a vehicle and an ITS server, and vehicle to pedestrian (V2P) meaning a communication mode performed between a vehicle and a mobile terminal carried by a pedestrian.

In 3GPP, V2X using cellular communication and inter-terminal communication of LTE or NR has been studied. V2X using cellular communication is also referred to as cellular V2X. In V2X of NR, studies for achieving large-capacity, low-delay, and high-reliability Quality of Service (QoS) control are under way.

For V2X of LTE or NR, review not limited to 3GPP specification is expected to be conducted from now. For example, cost reduction by securing of interoperability and implementing of an upper layer, a combining or switching method of a plurality of radio access technologies (RATs), support of regulation in each country, and data acquisition, delivery, database management, and use method of V2X platform of LTE or NR are expected to be under review.

In an embodiment of the present invention, a form in which the communication device is installed on a vehicle is mainly assumed, but the embodiment of the present invention is not limited to this form. For example, the communication device may be a terminal carried by a person, the communication device may be a device installed in a drone or an aircraft, and the communication device may be a base station, an RSU, a relay station (relay node), a user device having a scheduling capability, or the like.

Note that sidelink (SL) may be distinguished from uplink (UL) or downlink (DL) based on one of the following 1) to 4) or a combination thereof. Furthermore, SL may have any other name.
1) A resource arrangement in a time domain
2) A resource arrangement in a frequency domain
3) A synchronization signal to be referred to (including a sidelink synchronization signal (SLSS))
4) A reference signal used for path loss measurement for transmission power control

Furthermore, for orthogonal frequency division multiplexing (OFDM) of SL or UL, any one of cyclic-prefix OFDM (CP-OFDM), discrete Fourier transform-spread-OFDM (DFT-S-OFDM), OFDM without transform precoding, and OFDM with transform precoding may be applied.

In SL of LTE, Mode 3 and Mode 4 are specified for SL resource allocation to the user device 20. In Mode 3, transmission resources are dynamically allocated in accordance with downlink control information (DCI) transmitted from the base station device 10 to the user device 20. In Mode 3, semi persistent scheduling (SPS) can be performed as well. In Mode 4, the user device 20 autonomously selects transmission resources from a resource pool.

A slot in an embodiment of the present invention may be replaced with a symbol, a mini slot, a sub frame, a radio frame, a transmission time interval (TTI), or the like. Furthermore, a cell in an embodiment of the present invention may be replaced with a cell group, a carrier component, a BWP, a resource pool, a resource, a Radio Access Technology (RAT), or a system (including a wireless LAN) .

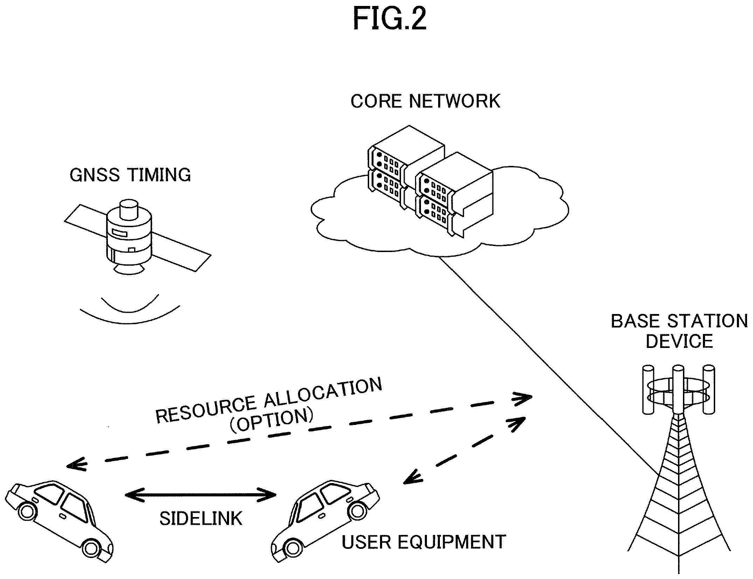

Fig. 2 is a diagram for illustrating direct communication in V2X. As illustrated in Fig. 2, among communication types in V2X, direct communication (sidelink) is executed from a user device to user device by broadcast via sidelink. A resource to be used for sidelink may be allocated from a base station device and a core network. As a synchronization timing, a signal from a global navigation satellite system (GNSS) may be referred to. The direct communication is extended to V2X for public safety communication and is under review.

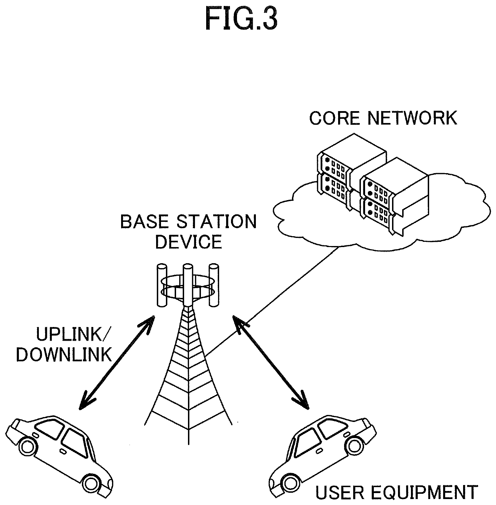

Fig. 3 is a diagram for illustrating communication via a base station in V2X. As illustrated in Fig. 3, among the communication types in V2x, communication via a base station (UL and DL) is executed among a user device, a base station device, and a core network in such a manner that unicast is applied to UL, and unicast or broadcast is applied to DL.

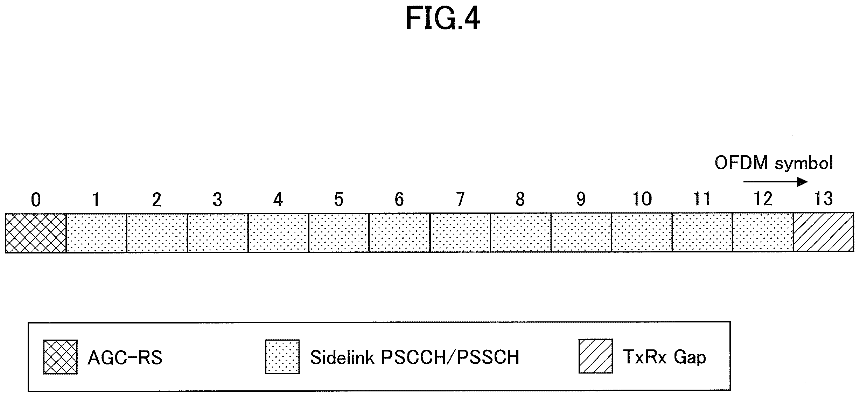

Fig. 4 is a diagram illustrating an example of a sidelink signal. In a packet of sidelink of LTE, as illustrated in Fig. 4, the auto gain control-reference signal (AGC-RS) is multiplexed with a first symbol, and a transmission/reception gap (TxRxGap) is multiplexed with a last symbol. In V2X, since dense power control is difficult as in normal DL or UL, the user device controls the AGC based on the AGC-RS for each received packet. The transmission/reception gap is allocated because a gap is necessary for switching from transmission to reception or switching from reception to transmission. As illustrated in Fig. 4, a Physical Sidelink Control Channel (PSCCH) or a Physical Sidelink Shared Channel (PSSCH) of sidelink may be arranged from a symbol #1 to a symbol #12.

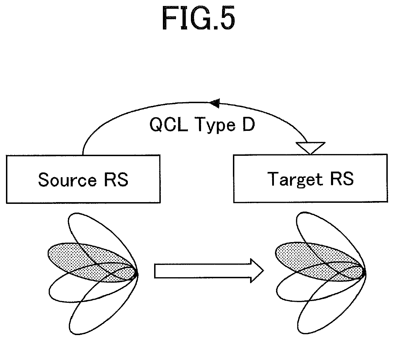

Fig. 5 is a diagram for illustrating control of a beam in an embodiment of the present invention. The base station device 10 may give a beam notification for the analog beam forming to the user device 20. Furthermore, the base station device 10 may notify the user device 20 of information related to a quasi-co-location (QCL). In a case in which the two reference signals are QCL, for example, for propagation path characteristics including a delay spread, a Doppler spread, a Doppler shift, an average gain, an average delay, a spatial reception parameter (spatial Rx parameter), or the like which are QCL parameters, propagation path characteristics of the one reference signal can be estimated from propagation path characteristics of the other reference signal. In other words, in a case in which the two reference signals are QCLs, a receiver can assume that two reference signals are transmitted from the same position and can have the same radio characteristics.

In NR, a transmission configuration indication (TCI) is defined. A TCI state indicates a QCL relation of a DL reference signal. A beam notification included in the TCI indicates the spatial reception parameter. The other QCL parameters such as the Doppler spread, the Doppler shift, the delay spread, the average delay, and the like are also included in the TCI. Table 1 shows a configuration example of the TCI, and Table 2 is an example of a QCL type.

**[Table 1]**

| TCI State# | Source RS 1 | QCL Type 1 | Source RS 2 | QCL Type |
|---|---|---|---|---|
| 0 | SSB 1 | D | CSI-RS (for tracking) | A |
| 1 | CSI-RS | A | CSI-RS | D |
| ... | ... | ... | ... | ... |
| M | SSB K | D | CSI-RS L | A |

**[Table 2]**

| QCL type | QCL parameter |
|---|---|
| A | Doppler shift, Doppler spread, delay average, delay spread |
| B | Doppler shift, Doppler spread |
| C | Delay average, Doppler shift |
| D | Spatial reception parameter |

There is a concept of a source RS and a target RS in the QCL relation. The receiver can refer to information calculated based on a source signal when a reception process of the target RS is performed. For example, in the reception process of the target RS, the receiver may use time or frequency synchronization information, spatial reception parameter, and the like, that are determined by a source signal.

As shown in Table 1, two source RSs and QCL types thereof may be specified for one TCI state. As the QCL type, as shown in Table 2, a QCL type A includes the Doppler shift, the Doppler spread, the delay average, and the delay spread as the QCL parameters. A QCL type B includes the Doppler shift and the Doppler spread as the QCL parameter. A QCL type C includes the delay average and the Doppler shift as the QCL parameters. A QCL type D includes the spatial reception parameter as the QCL parameter. For example, a TCI state #0 indicates that a source RS1 is a synchronization signal block (SSB) 1 and the QCL type D, and a source RS2 is channel state information RS for tracking (CSI-RS for tracking) and the QCL type A. Furthermore, a TCI state #1 indicates that the source RS1 is the CSI-RS and the QCL type A, and the source RS2 is the CSI-RS and the QCL type D. Furthermore, a TCI state #M indicates that the source RS1 is an SSB K and the QCL type D, and the source RS2 is CSI-RS L and the QCL type A. For each TCI state, the control channel or data channel may be the target. In other words, for example, the TCI state #0 may be identical to the TCI states of transmission signals of a corresponding PSCCH and a PSSCH.

As illustrated in Fig. 5, in the case of the QCL type D indicating that the source RS and the target RS and spatial reception parameters are the QCLs, the user device 20 can appropriately receive a target RS using the same reception beam forming when reception beam forming suitable for the source RS is known. In other words, the reception beam forming of the source RS can be applied to the reception beam forming of the target RS. The target RS is not limited to the reference signal, and may be a channel such as a PSCCH or a PSSCH or may be a DM-RS used for decoding a channel.

Here, an operation related to the reception of the AGC-RS, the PSCCH, and the PSSCH is described. Table 3 shows operations necessary for receiving the AGC-RS, the PSCCH, and the PSSCH.

**[Table 3]**

| | Time/frequency synchronization | Reception beam | AGC |
|---|---|---|---|
| AGC-RS reception | ✔ | ✔ | |
| PSCCH reception | ✔ | ✔ | ✔ |
| PSSCH reception | ✔ | ✔ | ✔ |

As shown in Table 3, in order to receive the AGC-RS, synchronization in the time domain and synchronization in the frequency domain are necessary, and it is necessary to determine reception beam forming of the AGC-RS. The determination of the reception beam forming may be determined while receiving the AGC-RS. In order to receive the PSCCH or the PSSCH, time domain synchronization and frequency domain synchronization are necessary, and it is necessary to determine reception beam forming of the PSCCH or the PSSCH and execute the AGC.

According to an embodiment of the present invention, QCL control is achieved that is for implementing time domain synchronization, frequency domain synchronization, determination of a reception beam, or execution of AGC control, which are required for sidelink reception.

For example, when there is no QCL information of the AGC-RS, the reception beam forming of the AGC-RS may be unable to be determined. The QCL information is information including signals which are at least two QCL and the QCL types or the QCL parameters of the signals. Furthermore, for example, when there is no QCL information, the time domain synchronization or the frequency domain synchronization may be unable to be acquired for receiving the AGC-RS. In this regard, the QCL information of the AGC-RS may be defined. For example, a reference signal which is the source RS of the AGC-RS may be defined. For example, the reference signal which is the source RS of the AGC-RS may be an SL-SSB or a signal forming an SL-SSB. Furthermore, for example, the reference signal which is the source RS of the AGC-RS may be an SL-CSI-RS for tracking. Furthermore, for example, the reference signal which is the source RS of the AGC-RS may be an SL-sounding reference signal (SRS). Furthermore, for example, the spatial reception parameter of the AGC-RS may be the same as those of the PSCCH, the PSSCH, or the DM-RS associated with these, information indicating that the AGC-RS and the PSCCH or the PSSCH are QCL may be provided by notification, or information indicating the QCL may be provided by notification as TCI information. In the following description, the reference signal or the RS may be a synchronization signal.

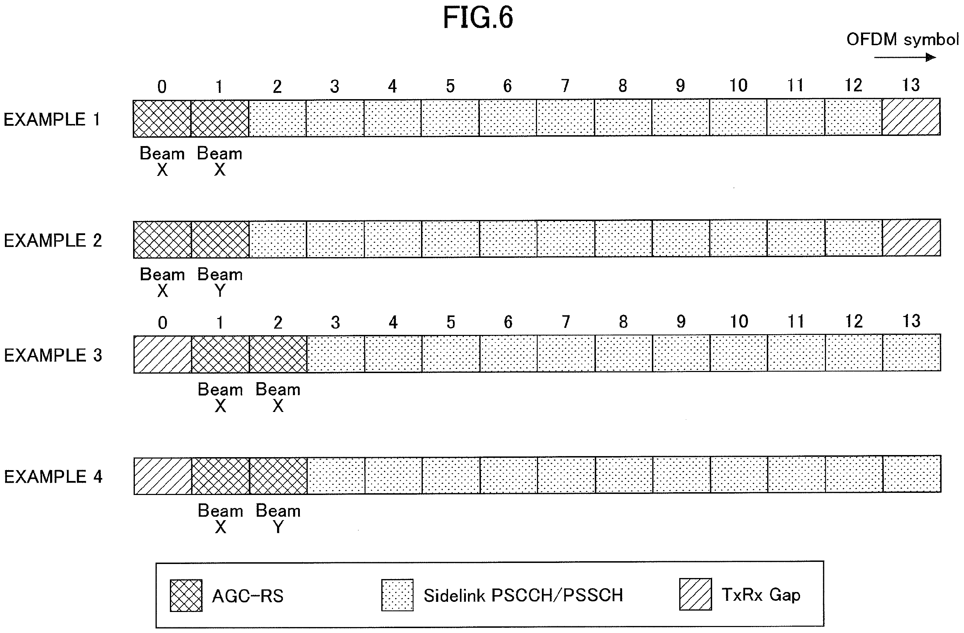

Fig. 6 is a diagram illustrating an example of a sidelink signal in an embodiment of the present invention. As illustrated in Fig. 6, the AGC-RS may be transmitted twice or more. In other words, the AGC-RS may be time-division multiplexed. It may be assumed that, as in Example 1, an AGC-RS of a symbol #0 and an AGC-RS of a symbol #1 are multiplied by the same pre-coding, that is, a beam X. At this time, the receiver may select the reception beam using two beam resources. Furthermore, it may be assumed that, as in Example 3, a gap is arranged in a symbol #0, and an AGC-RS of a symbol #0 and an AGC-RS of a symbol #1 are multiplied by the same pre-coding, that is, a beam X. For example, a method of applying the same pre-coding to a plurality of AGC-RSs corresponds to a state in which resource repetition is activated in CSI-RS based beam management. In the user device 20 on the reception side, the number of transmissions of the AGC-RS may be signaled from the user device 20 on the transmission side or the base station device 10.

Furthermore, it may be assumed that, as in Example 2, an AGC-RS of a symbol #0 and an AGC-RS of a symbol #1 are multiplied by different types of pre-coding, that is, a beam X and a beam Y, respectively. Furthermore, it may be assumed that, as in Example 4, a gap is arranged in a symbol #0, and an AGC-RS of a symbol #0 and an AGC-RS of a symbol #1 are multiplied by different types of pre-coding, that is, a beam X and a beam Y, respectively. Here, since different types of pre-coding are applied to a plurality of AGC-RSs, it is possible to select the corresponding transmission beam forming and determine the transmission beam forming. For example, a method of applying different types of pre-coding to a plurality of AGC-RSs corresponds to a state in which the resource repetition in the CSI-RS based beam management is deactivated. In the user device 20 on the reception side, information indicating that the pre-coders applied to the AGC-RSs are identical to each other may be signaled from the user device 20 on the transmission side or the base station device 10.

The user device 20 on the reception side may feed a measurement result of the AGC-RS back to the user device 20 on the reception side or the base station device 10. For example, a beam index of the AGC-RS may be fed back, or a reference signal received power (RSRP) value of the AGC-RS may be fed back.

Here, when the PSCCH or the PSSCH is received, information related to the time synchronization and the frequency synchronization and information related to the beam are necessary. When different beams are applied to the AGC-RS and the PSCCH or the PSSCH, the AGC controlled based on AGC-RS is not necessarily appropriate for the PSCCH or the PSSCH. In this regard, an association between the beam of the AGC-RS and the beam of the PSCCH or the PSSCH may be specified. The user device 20 may receive the PSCCH or the PSSCH while assuming that the AGC-RS and the PSCCH or the PSSCH are QCL. Furthermore, it may be specified that the AGC-RS and the PSSCH or the PSSCH are QCL with the same reference signal, for example, an SS. Table 4 is an example of the source RS and the target RS indicating the QCL relation.

**[Table 4]**

| Source RS | Target RS |
|---|---|
| SSB | AGC-RS |
| CSI-RS (including TRS) | AGC-RS |
| SSB | PSCCH (PSCCH DM-RS) |
| SSB | PSSCH (PSSCH DM-RS) |
| AGC-RS | PSCCH (PSCCH DM-RS) |
| AGC-RS | PSSCH (PSSCH DM-RS) |
| CSI-RS (including TRS) | PSCCH (PSCCH DM-RS) |
| CSI-RS (including TRS) | PSSCH (PSSCH DM-RS) |
| SSB | CSI-RS (including TRS) |
| AGC-RS | CSI-RS (including TRS) |
| CSI-RS (including TRS) | CSI-RS (including TRS) |

The reception beam forming of the source RS shown in Table 4 can be applied to the reception beam forming of the target RS. For example, when the source RS is the SSB, the target RS may be the AGC-RS, and the AGC-RS may be the source RS, and the demodulation-RS (DM-RS) of the PSCCH may be the target RS. The DM-RS of the PSCCH may be the PSCCH and the QCL. Furthermore, for example, when the source RS is the AGC-RS, the target RS may be the DM-RS of the PSSCH. The DM-RS of the PSSCH may be QCL with the PSSCH. Furthermore, for example, when the source RS is the CSI-RS (including a tracking RS (TRS)), the other CSI-RS may be the target RS.

The QCL relation in Table 4 may be the QCL related to the spatial reception parameter, that is, the QCL type D or may be the QCL related to the other parameters, the Doppler shift, the Doppler spread, the delay average, and the delay spread. Furthermore, the same reference signal or physical channel may be used for the QCL resource of the PSCCH and the QCL source of the PSSCH, the QCL resource of the PSCCH and the QCL source of the PSSCH may be independent of each other, or different reference signals or physical channels may be used for the QCL resource of the PSCCH and the QCL source of the PSSCH.

Here, in a case in which the AGC is performed using the AGC-RS, when a power difference between the AGC-RS and the PSCCH or the PSSCH is not adequately specified, the user device 20 is unable to appropriately control the power of the PSCCH or the PSSCH through the AGC. In this regard, the power of the AGC-RS and the power of the PSCCH or the PSSCH may be made equal. Alternatively, power obtained by adding a predetermined offset to the power of the AGC-RS may be used as the power of the PSCCH or the PSSCH. The offset may be signaled from a network. The offset may have a predetermined range. A difference from a reference signal may be provided by notification as the power information. For example, the reference signal may be any one of reference signals forming the SL-SSB and the SL-SSB.

Furthermore, an energy per resource element (EPRE) of the AGC-RS may be identical to the EPRE of the PSCCH or the PSSCH. Alternatively, the EPRE obtained by adding a predetermined offset to the EPRE of the AGC-RS may be used as the power of the PSCCH or the PSSCH. The offset may be signaled from a network. The offset may have a predetermined range.

The above-described power or EPRE may be specified from a point of view of the transmission power or may be defined from a point of view of the reception power. A notification of information related to the power or the EPRE may be provided to the user device 20 as the QCL parameter included in a new QCL type.

The QCL information applied to the AGC-RS may include a QCL parameter different from the QCL information of the related art. For example, as an independent QCL type, the reception power may be specified to be included in the QCL parameter. Furthermore, for example, as an independent QCL type, the transmission power may be specified to be included in the QCL parameter. The reception power or the transmission power may be total power or may correspond to the EPRE.

In the present disclosure, the AGC-RS may be a sidelink synchronization signal (SL-SS). Furthermore, the SL-SS may be a primary synchronization signal (PSS), a Secondary Synchronization Signal (SSS), any other synchronization signal, or any other a reference signal.

In the present disclosure, the AGC-RS, the PSCCH, or the PSSCH need not be necessarily multiplexed in the same slot or non-slot.

In an embodiment of the present disclosure, the description has proceeded mainly on the assumption of channels and signaling schemes of NR, but an embodiment of the present invention can be applied to channels and signaling having functions similar to those of NR. For example, an embodiment of the present invention can be applied to LTE or LTE-A.

In the present disclosure channels and signals of SL are mainly assumed, but in an embodiment of the present invention, channels and signals of an interface Uu between the base station device 10 and the user device 20 may be used.

Although various signaling examples have been described in the present disclosure, they are not limited to explicit methods, and they may be implicitly provided by notification of or uniquely specified in the specifications.

Furthermore, although various signaling examples have been described in the present disclosure, they may be signaling such as radio resource control (RRC), media access control control element (MACCE), downlink control information (DCI) or may be signaling such as master information block (MIB) or system information block (SIB). For example, RRC and DCI may be combined, RRC and MACCE may be combined, or other combination of signaling may be used. The signaling may be performed from a gNB, a transmitter of SL may go may perform the signaling to a receiver, or the receiver of SL may report the signaling to a gNB or a transmitter.

In the present disclosure, the examples of the cases of the slot configuration (a 14-symbol packet) have been mainly described, but they can be applied to a non-slot configuration (a packet of less than 14 symbols).

Furthermore, for a notation of beam in the present disclosure, whether a physical signal or channel undergoes beam forming may be transparent from the base station device 10 or the user device 20. In other words, the beam may simply be denoted as a signal or a reference signal. Furthermore, the reference signal to which beam forming is applied may be denoted as a RS resource or the like. Similarly, beam selection may be denoted as resource selection or the like, and a beam index may be denoted as a resource index or an antenna index.

In the present disclosure, embodiments can be combined with each other, and the features described in these examples can be combined with each other in various combinations. The present invention is not limited to a specific combination disclosed in this specification.

In the present disclosure, the description has proceeded with the slot configuration mainly using SL, but the technology in the present disclosure can be applied to environments in which DL, UL, and SL are mixed.

According to the above-described embodiment, the user device 20 can acquire the time domain synchronization and the frequency domain using an appropriate reference signal based on the QCL information related to the AGC-RS, determine the reception beam forming, execute the control based on the AGC, and appropriately receive the PSCCH or the PSSCH.

In other words, the user device can select an appropriate reference signal and execute communication in the Inter-terminal direct communication.

### (Device configuration)

Next, a functional configuration example of each of the base station device 10 and the user device 20 that execute the processes and the operation described so far is described. Each of the base station device 10 and the user device 20 has the function of implementing the embodiment. Here, each of the base station device 10 and the user device 20 may have only some of the functions in the embodiment.

### <Base station device 10>

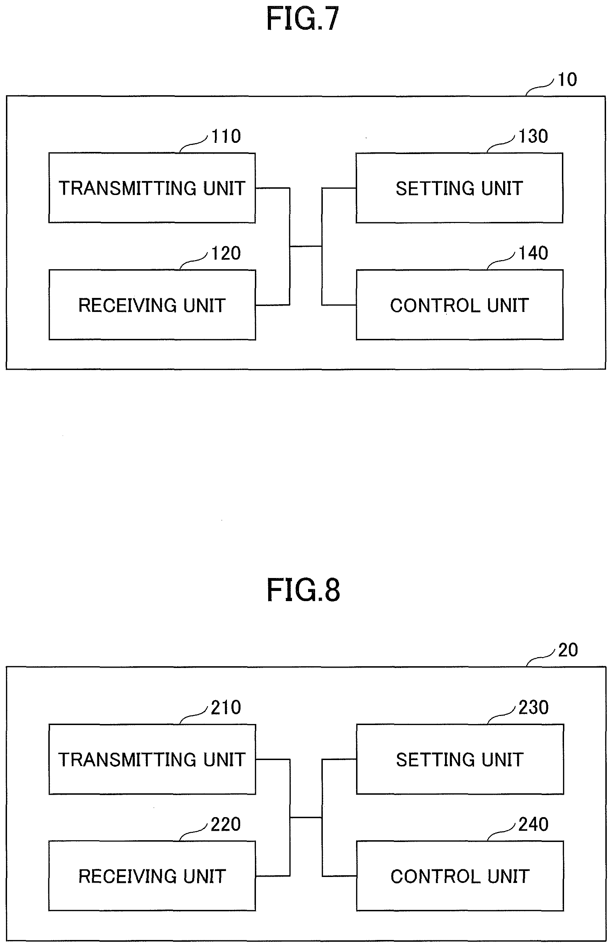

Fig. 7 is a diagram illustrating an example of a functional configuration of the base station device 10. As illustrated in Fig. 7, the base station device 10 has a transmitting unit 110, a receiving unit 120, a setting unit 130, and a control unit 140. The functional configuration illustrated in Fig. 7 is merely an example. As long as the operation according to an embodiment of the present invention can be executed, the function classification and the name of the function unit are not consequential.

The transmitting unit 110 has a function of generating a signal to be transmitted to the user device 20 and transmitting the signal wirelessly. The receiving unit 120 has a function of receiving various types of signals transmitted from the user device 20 and acquiring, for example, information of a higher layer from the received signals. The transmitting unit 110 has a function of transmitting the NR-PSS, the NR-SSS, the NR-PBCH, the DL/UL control signal, the DL reference signal, or the like to the user device 20.

The setting unit 130 stores pre-configured configuration information and various types of configuration information to be transmitted to the user device 20 in the storage device and reads the configuration information from the storage device if necessary. For example, content of the configuration information is, for example, information related to a QCL configuration of the D2D communication or the like.

As described in the embodiment, the control unit 140 performs a process related to the configuration used for the user device 20 to perform the D2D communication. Furthermore, the control unit 140 performs a process related to the determination of the resource used for transmission of the synchronization signal and the broadcast information of the D2D communication. The control unit 140 transmits the scheduling of the D2D communication to the user device 20 via the transmitting unit 110. A functional unit related to signal transmission in the control unit 140 may be included in the transmitting unit 110, and a functional unit related to signal reception in the control unit 140 may be included in the receiving unit 120.

### <User device 20>

Fig. 8 is a diagram illustrating an example of a functional configuration of the user device 20.

As illustrated in Fig. 8, the user device 20 has a transmitting unit 210, a receiving unit 220, a setting unit 230, and a control unit 240. The functional configuration illustrated in Fig. 8 is merely an example. As long as the operation according to an embodiment of the present invention can be executed, the function classification and the name of the function unit are not consequential.

The transmitting unit 210 generates a transmission signal from transmission data and transmits the transmission signal wirelessly. The receiving unit 220 wirelessly receives various types of signals, and acquires a signal of a higher layer from a received signal of a physical layer. The receiving unit 220 also has a function of receiving the NR-PSS, the NR-SSS, the NR-PBCH, the DL/UL/SL control signal, the reference signal, or the like transmitted from the base station device 10. Furthermore, for example, the transmitting unit 210 may transmit a physical sidelink control channel (PSCCH), a physical sidelink shared channel (PSSCH), a physical sidelink discovery channel (PSDCH), a physical sidelink broadcast channel (PSBCH), and the like to other user devices 20 as the D2D communication, and the receiving unit 220 receives the PSCCH, the PSSCH, the PSDCH, the PSBCH, and the like from other user devices 20.

The setting unit 230 stores various types of configuration information received from the base station device 10 or the user device 20 through the receiving unit 220 in the storage device and reads the configuration information from the storage device if necessary. The setting unit 230 also stores pre-configured configuration information. For example, content of the configuration information is, for example, information related to the QCL configuration of the D2D communication or the like.

The control unit 240 controls D2D communication with other user devices 20 as described above in the embodiment. Furthermore, the control unit 240 performs a process of determining the QCL of the synchronization signal, the reference signal, the control signal, or the data signal of the D2D communication based on the information related to the QCL configuration of the signal to be used for the D2D communication. A functional unit related to signal transmission in the control unit 240 may be included in the transmitting unit 210, and a functional unit related to signal reception in the control unit 240 may be included in the receiving unit 220.

### (Hardware Configuration)

In the block diagrams (Figs. 7 and 8) used for the description of the above embodiment, the blocks of the functional units are illustrated. The functional blocks (configuring units) are implemented by at least an arbitrary combination of hardware and/or software. A method of implementing each functional block is not particularly limited. In other words, each functional block may be implemented by one device in which a plurality of elements is physically and/or logically combined or may be implemented by a plurality of devices, that is, two or more devices which are physically and/or logically separated and are directly and/or indirectly connected (for example, in a wired and/or wireless manner or the like). The function block may be realized by combining software with one device or a plurality of devices.

The functions include determining, deciding, judging, computing, calculating, processing, deriving, investigating, searching, confirming, receiving, transmitting, outputting, accessing, resolving, selecting, choosing, establishing, comparing, assuming, expecting, regarding, broadcasting, notifying, communicating, forwarding, configuring, reconfiguring, allocating, mapping, assigning, and the like but are not limited thereto. For example, a functional block (configuring unit) that causes transmission to function is referred to as a transmitting unit or a transmitter. In any case, as described above, an implementation method is not particularly limited.

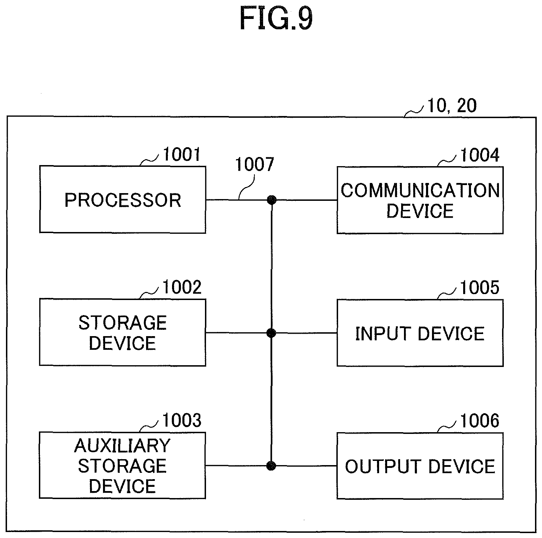

For example, the base station device 10, the user device 20, or the like in one embodiment of the present disclosure may function as a computer for processing the present disclosure's wireless communication method. Fig. 9 is a diagram illustrating an example of a hardware configuration of the base station device 10 and the user device 20 according to an embodiment of the present disclosure. Each of the base station device 10 and the user device 20 may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station device 10 and the user device 20 may be configured to include one or more devices illustrated in the drawing or may be configured without including some devices.

Each function in each of the base station device 10 and the user device 20 is implemented such that predetermined software (program) is read on hardware such as the processor 1001 and the storage device 1002, and the processor 1001 performs an operation and controls communication by the communication device 1004 and reading and/or writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the control unit 140, the control unit 240, and the like described above may be implemented by the processor 1001.

Furthermore, the processor 1001 reads a program (program code), a software module, or data from at least one of the auxiliary storage device 1003 and/or the communication device 1004 out to the storage device 1002, and executes various types of processes according to them. A program causing a computer to execute at least some of the operations described in the above embodiment is used as the program. For example, the control unit 140 of the base station device 10 illustrated in Fig. 7 may be implemented by a control program which is stored in the storage device 1002 and operates on the processor 1001. Furthermore, for example, the control unit 240 of the user device 20 illustrated in Fig. 8 may be implemented by a control program which is stored in the storage device 1002 and operates on the processor 1001. Various types of processes have been described as being performed by one processor 1001 but may be performed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The auxiliary storage device 1003 is also referred to as an "auxiliary storage device." The storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may include a high-frequency switch, a duplexer, a filter, a frequency synthesizer, or the like in order to implement at least one of frequency division duplex (FDD) and time division duplex (TDD). For example, a transmitting and receiving antenna, an amplifying unit, a transmitting/receiving unit, a transmission line interface, or the like may be implemented by the communication device 1004. The transmitting/receiving unit may be implemented by to be physically or logically separated by a transmitting unit and a receiving unit.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The respective devices such as the processor 1001 and the storage device 1002 are connected via the bus 1007 to communicate information with each other. The bus 1007 may be configured with a single bus or may be configured with different buses between the devices.

Furthermore, each of the base station device 10 and the user device 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented using at least one of these pieces of hardware.

### (Conclusion of embodiment)

As described above, according to an embodiment of the present invention, provided is a user device including a control unit that determines a spatial reception parameter of a control channel or a data channel based on quasi-co-location (QCL) information related to a reference signal and a receiving unit that performs reception by applying reception beam forming to the control channel or the data channel based on the determined spatial reception parameter.

With the above configuration, the user device 20 can acquire the time domain synchronization and the frequency domain using an appropriate reference signal based on the QCL information related to the AGC-RS, determine the reception beam forming, execute the control based on the AGC, and appropriately receive the PSCCH or the PSSCH. In other words, the user device can select an appropriate reference signal and execute communication in the Inter-terminal direct communication.

The reference signal may be a signal used for auto gain control (AGC), and a signal that is indicated to be QCL with the reference signal by the QCL information may be any one of a synchronization signal block (SSB) of sidelink, channel state information reference signal for tracking (CSI-RS for tracking) of sidelink, or a sounding reference signal (SRS) of sidelink. With this configuration, the user device 20 can use an appropriate reference signal based on the QCL information related to the AGC-RS.

The reference signal may be either a reference signal repeatedly transmitted by applying the same transmission beam forming or a plurality of reference signals to which different types of transmission beam forming are applied. With this configuration, the user device 20 can receive a plurality of reference signals and determine the reception beam forming.

The QCL information may include information indicating that the reference signal is QCL with a demodulation reference signal of the control channel or the data channel. With this configuration, the user device 20 can determine the reception beam forming to be applied to the PSCCH or the PSSCH and perform reception appropriately.

The QCL information may be specified as a QCL type in which information related to received power or transmission power is included in a QCL parameter. With this configuration, the user device 20 can appropriately determine the power based on the QCL information when the AGC is executed.

The QCL type may include information indicating that power of the reference signal and power of the control channel or the data channel are equal or indicating that power obtained by adding a predetermined offset to the power of the reference signal is the power of the control channel or the data channel. With this configuration, the user device 20 can appropriately determine the power based on the QCL information when the AGC is executed.

### (Supplement of embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent).

The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station device 10 and the user device 20 have been described using the functional block diagrams, but such devices may be implemented by hardware, software, or a combination thereof. Software executed by the processor included in the base station device 10 according to the embodiment of the present invention and software executed by the processor included in the user device 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be given by any other method. For example, the notification of information may be given by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment of the present invention may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and next generation systems extended based on these standards. Furthermore, a plurality of systems may be combined and applied (for example, a combination of at least one of LTE and LTE-A and 5G or the like).

The processing procedures, the sequences, the flowcharts, and the like of the respective aspects/embodiments described in this specification may be reversed in order unless there is a contradiction. For example, the method described in the present disclosure presents elements of various steps using an exemplary order and is not limited to a presented specific order.

In this specification, a specific action that is supposed to be performed by the base station device 10 may be performed by an upper node in some cases. In the network including one or more network nodes including the base station device 10, various operations performed for communication with the user device 20 can be obviously performed by at least one of the base station and any network node (for example, an MME, an S-GW, or the like is considered, but it is not limited thereto) other than the base station device 10 and/or the base station device 10. The example in which the number of network nodes excluding the base station device 10 is one has been described above, but other network nodes in which a plurality of other network nodes (for example, an MME and an S-GW) are combined may be provided.

Information, a signal, or the like described in the present disclosure may be output from an upper layer (or a lower layer) to a lower layer (or an upper layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

The terms described in the present disclosure and terms necessary for understanding the present disclosure may be replaced with terms having the same or similar meanings. For example, at least one of a channel and a symbol may be a signal. Furthermore, a signal may be a message. Furthermore, a component carrier (CC) may be referred to as a "carrier frequency," a "cell," or the like.

The terms "system" and "network" used in the present disclosure are used interchangeably.

Furthermore, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Furthermore, mathematical formulas or the like using the parameters may be different from those explicitly disclosed in the present disclosure. Since various channels (for example, a PUCCH, a PDCCH, and the like) and information elements can be identified by suitable names, various names allocated to the various channels and the information elements are not limited in any respect.

In the present disclosure, the terms "base station (BS)," "radio base station," "base station device," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user device (UE)," "terminal," and the like can be used interchangeably.

The mobile station may be referred to by a person ordinarily skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be also referred to as a transmitting device, a receiving device, a communication device, or the like. At least one of the base station and the mobile station may be a device installed in a mobile body, a mobile body itself, or the like. The moving body may be a vehicle (for example, a car, an airplane, or the like), a moving body that moves unmanned (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Furthermore, the base station in the present disclosure may be replaced with a user terminal. For example, each aspect/embodiment of the present disclosure may be applied to a configuration in which communication between the base station and the user terminal is replaced with communication between a plurality of user devices 20 (for example, which may be referred to as device-to-device (D2D) or vehicle-to-everything (V2X)). In this case, the user device 20 may have the functions of the base station device 10 described above. Furthermore, the terms "uplink" and "downlink" may be replaced with terms (for example, "side") corresponding to inter-terminal communication. For example, an uplink channel, a downlink channel, or the like may be read with side channels.

Similarly, the user terminal in the present disclosure may be replaced with the base station. In this case, the base station may have the functions of the above-mentioned user terminal.

The term "determining" used in this specification may include a wide variety of actions. For example, "determining" may include, for example, events in which events such as judging, calculating, computing, processing, deriving, investigating, looking up, search, and inquiry (for example, looking up in a table, a database, or another data structure), or ascertaining are regarded as "determining." Furthermore, "determining" may include, for example, events in which events such as receiving (for example, receiving information), transmitting (for example, transmitting information), input, output, or accessing (for example, accessing data in a memory) are regarded as "determining." Furthermore, "determining" may include, for example, events in which events such as resolving, selecting, choosing, establishing, or comparing are regarded as "determining." In other words, "determining" may include events in which a certain operation is regarded as "determining." Furthermore, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based on only" unless otherwise stated. In other words, a phrase "based on" means both "based on only" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Furthermore, "means" in the configuration of each of the above devices may be replaced with "unit," "circuit," "device," or the like.

In a case in which "include," "including," and variations thereof are used in the present disclosure, these terms are intended to be comprehensive, similarly to a term "equipped with (comprising)." Furthermore, the term "or" used in the present disclosure is intended not to be an exclusive disjunction.

A radio frame may include one or more frames in the time domain. In the time domain, each of one or more frames may be referred to as a sub frame. The sub frame may Furthermore include one or more slots in the time domain. The sub frame may have a fixed time length (for example, 1 ms) not depending on numerology.

The numerology may be a communication parameter applied to at least one of transmission and reception of a certain signal or channel. For example, the numerology may indicate at least one of a sub carrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Furthermore, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a sub frame, a slot, a mini slot, and a symbol indicates a time unit for transmitting a signal. As a radio frame, a sub frame, a slot, a mini slot, and a symbol, different designations respectively corresponding to them may be used.

For example, one sub frame may be referred to as a transmission time interval (TTI: Transmission Time Interval), or a plurality of consecutive sub frames may be referred to as TTIs, or one slot or one mini slot may be referred to as a TTI. In other words, at least one of the sub frame and the TTI may be a sub frame (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the sub frame.

Here, for example, the TTI refers to a minimum time unit of scheduling in wireless communication. For example, in the LTE system, the base station performs scheduling of allocating a radio resource (a frequency bandwidth, a transmission power, or the like which can be used in each user device 20) to each user device 20 in units of TTIs. The definition of the TTI is not limited thereto.

The TTI may be a transmission time unit such as a channel coded data packet (transport block), a code block, or a code word, or may be a processing unit such as scheduling or link adaptation. Furthermore, when a TTI is given, a time interval (for example, the number of symbols) in which a transport block, a code block, a code word, or the like is actually mapped may be shorter than the TTI.

Furthermore, when one slot or one mini slot is referred to as a TTI, one or more TTIs (that is, one or more slots or one or more mini slots) may be a minimum time unit of scheduling. Furthermore, the number of slots (the number of mini slots) constituting the minimum time unit of scheduling may be controlled.

A TTI having a time length of 1 ms may be referred to as a common TTI (TTI in LTE Rel. 8 to 12), a normal TTI, a long TTI, a common sub frame, a normal sub frame, a long sub frame, a slot, or the like. A TTI shorter than the common TTI may be referred to as a reduced TTI, a short TTI, a partial TTI (a partial or fractional TTI), a reduced sub frame, a short sub frame, a mini slot, a sub slot, a slot, or the like.

Furthermore, a long TTI (for example, a common TTI, a sub frame, or the like) may be replaced with a TTI having a time length exceeding 1 ms, and a short TTI (for example, a reduced TTI or the like) may be replaced with a TTI having a TTI length which is less than a TTI length of a long TTI and equal to or more than 1 ms.

The resource block (RB) is a resource allocation unit in the time domain and the frequency domain and may include one or more consecutive sub carriers in the frequency domain. The number of sub carriers included in an RB may be the same irrespective of a numerology and may be, for example, 12. The number of sub carriers included in an RB may be determined based on a numerology.

Furthermore, a time domain of an RB may include one or more symbols and may be a length of one slot, one mini slot, one sub frame, or one TTI. Each of one TTI, one sub frame, or the like may be constituted by one or more resource blocks.

Furthermore, one or more RBs may be referred to as a physical resource block (PRB), a sub carrier group (SCG), a resource element group (REG), a PRB pair, a RB pair, or the like.

Furthermore, the resource block may be constituted by one or more resource elements (RE). For example, one RE may be a radio resource region of one sub carrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and it may not be assumed that the UE transmits and receives a predetermined signal/channel outside an active BWP. Furthermore, a "cell," a "carrier," or the like in the present disclosure may be replaced with a "BWP."

Structures of the radio frame, the sub frame, slot, the mini slot, and the symbol are merely examples. For example, configurations such as the number of sub frames included in a radio frame, the number of slots per sub frame or radio frame, the number of mini slots included in a slot, the number of symbols and RBs included in a slot or a mini slot, the number of sub carriers included in an RB, the number of symbols in a TTI, a symbol length, a cyclic prefix (CP) length, and the like can be variously changed.

In the entire present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted in similarly to "different."

Each aspect/embodiment described in this specification may be used alone, in combination, or may be switched in accordance with the execution. Furthermore, notification of predetermined information (for example, notification of "being X") is not limited to being performed explicitly, but is performed by implicit (for example, not providing notification of the predetermined information) It is also good.

In the present disclosure, the AGC-RS is an example of a reference signal. The PSCCH is an example of a control channel. The PSSCH is an example of a data channel.

Although the present disclosure has been described above in detail, it is obvious to those skilled in the art that the present disclosure is not limited to the embodiments described in the present disclosure. The present disclosure may be implemented as revised and modified forms without departing from the gist and scope of the present disclosure as configured forth in claims. Therefore, the description of the present disclosure is for the purpose of illustration and does not have any restrictive meaning to the present disclosure.

### LIST OF REFERENCE SYMBOLS

- 10: BASE STATION DEVICE
- 110: TRANSMITTING UNIT
- 120: RECEIVING UNIT
- 130: SETTING UNIT
- 140: CONTROL UNIT
- 20: USER DEVICE
- 210: TRANSMITTING UNIT
- 220: RECEIVING UNIT
- 230: SETTING UNIT
- 240: CONTROL UNIT

- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A user device, comprising:
a control unit that determines a spatial reception parameter of a control channel or a data channel based on quasi-co-location (QCL) information related to a reference signal; and
a receiving unit that performs reception by applying reception beam forming to the control channel or the data channel based on the determined spatial reception parameter.

2. The user device according to claim 1, wherein the reference signal is a signal used for auto gain control (AGC), and a signal that is indicated to be QCL with the reference signal by the QCL information is any one of a synchronization signal block (SSB) of sidelink, a channel state information reference signal for tracking (CSI-RS for tracking) of sidelink, or a sounding reference signal (SRS) of sidelink.

3. The user device according to claim 2, wherein the reference signal is either a reference signal repeatedly transmitted by applying a same transmission beam forming or is a plurality of reference signals to which different types of transmission beam forming are applied.

4. The user device according to claim 1, wherein the QCL information includes information indicating that the reference signal is QCL with a demodulation reference signal of the control channel or the data channel.

5. The user device according to claim 1, wherein the QCL information is specified as a QCL type in which information related to received power or transmission power is included in a QCL parameter.

6. The user device according to claim 5, wherein the QCL type includes information indicating that power of the reference signal and power of the control channel or the data channel are equal or indicating that power obtained by adding a predetermined offset to the power of the reference signal is the power of the control channel or the data channel.
